# EUROPÄISCHE PATENTSCHRIFT

(11) **EP 3 643 412 B1**
(45) Veröffentlichungstag und Bekanntmachung des Hinweises auf die Patenterteilung: **12.01.2022**
(21) Anmeldenummer: 19189768.5
(22) Anmeldetag: 12.11.2018
(51) Int. Cl.: B05D 5/08

(54) **BESCHICHTUNGSDISPERSION, HERSTELLUNGSVERFAHREN EINER BESCHICHTUNGSDISPERSION**
COATING DISPERSION, METHOD OF MANUFACTURING A COATING DISPERSION
DISPERSION DE REVÊTEMENT, PROCÉDÉ DE FABRICATION D'UNE DISPERSION DE REVÊTEMENT

(30) Priorität: 15.12.2017 DE 102017130241; 18.12.2017 DE 102017011842
(43) Veröffentlichungstag der Anmeldung: 29.04.2020
(62) Teilanmeldung aus: 18020592.4
(73) Patentinhaber: Eloxalwerk Ludwigsburg Helmut Zerrer GmbH, 71642 Ludwigsburg-Neckarweihingen (DE)
(72) Erfinder:
(74) Vertreter: Jeck, Anton

(56) Entgegenhaltungen:
- DE-A1-102005 009 552
- FR-A1- 2 871 038

## Beschreibung

### Stand der Technik

Die vorliegende Erfindung betrifft eine Beschichtungsdispersion nach Anspruch 1 sowie ein Herstellungsverfahren einer Beschichtungsdispersion nach Anspruch 2. Die Erfindung geht aus von einer Beschichtungsdispersion nach der Gattung des Oberbegriffs des Anspruchs 1 und einem Herstellungsverfahren einer Beschichtungsdispersion nach der Gattung des Oberbegriffs des Anspruchs 2.

Konventionelle Beschichtungen in Form von Gleitlacken halten den wachsenden Ansprüchen - vor allem auch im Bereich des Leichtbaus - oft nicht mehr stand. Hier lösen angepasste und funktionalisierte tribologische Beschichtungssysteme auf Polymerbasis die konventionellen Gleitlacke ab. Hochtemperaturbeständige Polymere wie Polyetheretherketon (PEEK) werden als reibungsreduzierende Matrix bereits genutzt, wobei inkorporierte Partikel die Schichtsysteme hinsichtlich ihrer physikalischen Eigenschaften (Verschleiß, Härte ect.) weiter verbessern.

Viele Untersuchungen bezogen sich bislang auf die Herabsetzung des Reibungskoeffizienten im Reibsystem PEEK-Bulk-Material zu Stahl, indem in die PEEK-Matrix Partikel inkorporiert wurden (SiC-Polytetrafluorethylen(PTFE)-PEEK (Qi-Hua Wang, 2000), AIN-PEEK (R.K. Goyal., 2005), Carbonfaser-Graphit-PEEK und Carbonfaser-Graphit-PTFE-PEEK (V. Rodriguez, 2016)).

Auch werden bereits Beschichtungsmaterialien, basierend auf PEEK-Dispersionen, zur Reduzierung von Reibung und Verschleiß eingesetzt. So wurden z.B. anorganische fulleren-ähnliche Nanopartikel inkorporiert, um den Reibungskoeffizienten in PEEK-Schichten zu reduzieren (Xianghui Hou, 2008). Im Bereich von Kompressoren wurde die Anwendung von PEEK/PTFE- und PEEK/Ceramic-Beschichtungen untersucht, da diese neben der bereits erwähnten positiven Wirkung auf den Reibkoeffizienten noch zusätzlich selbstschmierende Eigenschaften aufweisen und hohe chemische Beständigkeit liefern (YEO, 2013).

Die Patentanmeldung DE 10 2012 207 819 A1 offenbart Gleitlacke aus thermisch aushärtbaren Polymeren mit Festschmierstoffen und Metallpigmenten. Die hier erwähnten Aushärtungsverfahren beinhalten das Aushärten des Gleitlacks mittels IR-Strahlung.

Aus der FR 2 871 038 A1 ist eine Beschichtungsdispersion bekannt, welche auf einer Fluorcarbonbasis beruht und neben weiteren Bestandteilen einen geringen Anteil an PEEK- Polymer enthält.

DE 10 2005 009552 A1 lehrt eine Beschichtungsdispersion mit einem Anteil an PEEK- Polymer, Feststoffpartikeln und Fluorcarbonadditiv als Trockenschmiermittel.

Bislang genutzte Beschichtungsverfahren beinhalten zunächst einen Schichtauftrag in flüssiger (Paste, Dispersion) oder fester (Pulver) Form mit anschließendem Aufschmelzen der Schicht im Ofenprozess. Aufgrund der hohen Schmelztemperatur des PEEKs (340°C) muss das gesamte Substrat Temperaturen von 380-420°C für einen längeren Zeitraum (10 Min bis zu mehreren Stunden) ausgesetzt werden.

Das Aufschmelzen der funktionalen polymerbasierten Schichten erfolgt bislang durch Aufschmelzen im Ofenprozess. Hierbei wird das Ganze zu beschichtende Bauteil einer hohen Temperatur - im Falle von PEEK von rund 400°C - ausgesetzt. Dies ist insbesondere für temperaturempfindliche Substrate kritisch. So ist im Falle von Leichtbaumaterialien (z.B. Aluminiumlegierungen) aber auch von anlassempfindlichen Lagerstählen (z.B. 100Cr6) mit Gefügeänderungen und damit einhergehender signifikanter Abnahme der Festigkeit zu rechnen. Im Falle von Aluminiumlegierungen kommt es zu Entmischungen und Kornwachstum, was zu einer Reduzierung von rund 60 % der Festigkeit führen kann.

Auch ist es mit der bisherigen Technologie möglich, nur eine Schichtart zu applizieren. Unterschiedliche ortsselektive Schichtdicken, die an die Funktionalität und die Anforderungen angepasst sind, an einem Bauteil zu realisieren, ist mit den bisherigen Schichtsystemen nicht möglich.

Durch Einführung der IR-Strahlung im Bereich der Lacktrocknung können Prozesse durch Einbringen von Wärme bereits beschleunigt werden. Die Wärme wird in diesem Fall direkt an den Lack übertragen, sodass die Umgebung, wie es im konventionellen Ofenprozess der Fall ist, nicht mit erwärmt wird. Jedoch kann aufgrund der Wellenlängen im IR-Bereich wie auch der benötigten Dauer der Bestrahlung eine Wechselwirkung mit dem Substrat nicht ausgeschlossen werden, sodass dieses ebenfalls eine unerwünschte Erwärmung erfährt.

Im Bereich der verschleißbeständigen Gleitlacke, insbesondere im Bereich des Kolbenschafts, kommen z.B. mit Graphit gefüllte Kunstharze oder verschleißfestere Beschichtungen mit Festschmierstoffen zum Einsatz, die jedoch ebenfalls im Ofenprozess appliziert werden (Basshuysen & Schäfer, 2017).

Da vor allem auch im Antriebsstrang im Automobilbereich immer höhere Anforderungen entstehen, sind bestehende Systeme zur Reibungsreduzierung und Erhöhung der Lebensdauer der einzelnen Komponenten sehr begrenzt.

Der Erfindung liegt daher die Aufgabe zugrunde, eine tribologische Beschichtungsdispersion und ein Herstellungsverfahren einer tribologischen Beschichtungsdispersion zur Verfügung zu stellen, die die oben beschriebenen Nachteile ausräumen, und insbesondere eine enorme Steigerungen hinsichtlich der Verschleißbeständigkeit erzielen.

Die Aufgabe wird durch die Beschichtungsdispersion mit den Merkmalen des Patentanspruchs 1 und das Herstellungsverfahren einer Beschichtungsdispersion mit den Merkmalen des Patentanspruchs 2 gelöst.

Diese sind:
Eine Beschichtungsdispersion mit
   - 25-50 Gew.-% Festkörperbestandteil,
   - mindestens einem Netzmittel und
   - mindestens einem Dispergierhilfsmittel, wobei der Festkörperbestandteil PEEK-Pulver und mindestens ein Additiv beinhaltet,
      - wobei der Festkörperbestandteil auch mindestens ein Wärmeeintrag minimierendes Additiv beinhaltet, welches mindestens ein Spinell, ein Carbid und/oder ein Nitrid ist.
Herstellungsverfahren einer Beschichtungsdispersion bestehend aus
   - 25-50 Gew.-% Festkörperbestandteil,
   - Netzmittel und
   - Dispergierhilfsmittel, wobei der Festkörperbestandteil PEEK-Pulver und mindestens ein Additiv beinhaltet,
   - dass mindestens ein Spinell, ein Carbid und/oder ein Nitrid als ein Additiv unter Druckeinwirkung, Temperatureinwirkung, chemischer Einwirkung und/oder durch Wärmeeintrag einer Schutzkolloidierung unterzogen wird,

### Die Erfindung und ihre Vorteile

Die erfindungsgemäße Beschichtungsdispersion mit den Merkmalen des Anspruchs 1 hat demgegenüber den Vorteil, dass der Festkörperbestandteil auch mindestens ein Wärmeeintrag minimierendes Additiv beinhaltet, welches mindestens ein Spinell, ein Carbid und/oder ein Nitrid ist. Somit entsteht eine Beschichtungsdispersion in Form einer wässrigen Suspension, welche z. B. durch Rakeln, Drucken oder Spritzen auf ein Bauteil an der erforderlichen Stelle aufgetragen und aufgrund ihrer additivierten Partikel in z. B. einem Laserprozess mit Zuhilfenahme von einem, zwei oder mehreren Laserquellen aufgeschmolzen und funktionalisiert werden kann. Dabei wird der Wärmeeintrag in das Substrat wie auch die erforderliche Energie minimiert.

Die Beschichtungsdispersion besteht üblicherweise aus 25-50 Gew.- % Festkörperanteil (PEEK-Pulver + Additiv(e)). Weitere wichtige Bestandteile sind Netzmittel, die die Benetzung der zu beschichtenden Oberfläche erleichtern (möglicher Gehalt bei ca. 0,55 Gew.-%). Als Dispergierhilfsmittel können Ethoxylate oder Acrylpolymere eingesetzt werden. Die Beschichtungsdispersionen sind frei von niedrigsiedenden Lösemitteln.

Nach einer vorteilhaften Ausgestaltung der erfindungsgemäßen Beschichtungsdispersion ist das Additiv mit bis zu 8 Gew.-% ausgewählt.

Nach einer vorteilhaften Ausgestaltung der erfindungsgemäßen Beschichtungsdispersion beinhaltet die Beschichtungsdispersion mindestens ein Tensid.

Nach einer diesbezüglichen Ausgestaltung der erfindungsgemäßen Beschichtungsdispersion macht mindestens ein Tensid bis zu 6,5 Gew-% der Beschichtungsdispersion aus. Durch den Einsatz verschiedener Tenside kann z.B. die Benetzbarkeit verbessert werden.

Nach einer vorteilhaften Ausgestaltung der erfindungsgemäßen Beschichtungsdispersion ist mindestens ein Dispergierhilfsmittel ein Ethoxylat.

Nach einer vorteilhaften Ausgestaltung der erfindungsgemäßen Beschichtungsdispersion ist mindestens ein Dispergierhilfsmittel ein Acrylpolymer.

Nach einer vorteilhaften Ausgestaltung der erfindungsgemäßen Beschichtungsdispersion beinhaltet die Beschichtungsdispersion mindestens ein hydrophiles Polymer.

Nach einer diesbezüglichen Ausgestaltung der erfindungsgemäßen Beschichtungsdispersion macht mindestens ein hydrophiles Polymer 2-6 Gew.-% der Beschichtungsdispersion aus. Es hat sich gezeigt, dass sich der Zusatz von hydrophilen Polymeren im Bereich von 2-6 Gew.-% als vorteilhaft in Hinblick auf die Dispergierbarkeit erweist.

Das erfindungsgemäße Herstellungsverfahren einer Beschichtungsdispersion mit den Merkmalen des Anspruchs 9 hat demgegenüber den Vorteil, dass mindestens ein Additiv unter Druckeinwirkung, Temperatureinwirkung, chemischer Einwirkung und/oder durch Wärmeeintrag einer Schutzkolloidierung unterzogen wird.

Nach einer diesbezüglichen vorteilhaften Ausgestaltung des erfindungsgemäßen Herstellungsverfahrens geschieht die Schutzkolloidierung mindestens eines Additivs durch ein Aufscheren mit Acrylpolymeren. Die Additive können durch chemische Modifizierung vor dem Sinterprozess einer Schutzkolloidierung unterzogen werden, indem sie unter intensiver Druck- und Temperatureinwirkung in Anwesenheit von geeigneten chemischen Substanzen mit vorzugsweise Acrylpolymeren aufgeschert werden. Ausgewählte Tenside erhalten diesen Zustand.

Nach einer vorteilhaften Ausgestaltung des erfindungsgemäßen Herstellungsverfahrens wird mindestens ein Additiv in Anwesenheit von mindestens einem Passivator und/oder mindestens einem Deagglomerator funktionalisiert. Die Additive können durch eine Behandlung in einer Kugelmühle in Anwesenheit von Passivatoren und Deagglomeratoren dahingehend funktionalisiert werden, dass im beginnenden Sintervorgang die Kristallisation des Polymers gehemmt oder sogar unterdrückt und die Ausrichtung der Partikel innerhalb der Schicht beeinflusst werden kann. Amorph eingefrorene Schichten bergen den Vorteil, dass der Verschleiß am Reibpartner parametrisiert werden kann. Die hohe Duktilität ermöglicht einerseits die Beschichtung besonders komplexer Bauteile und weist andererseits eine signifikante Erhöhung der Schwingungsfestigkeit auf.

Als weiteres besonderes Merkmal bilden die hier beschriebenen Dispersionen im Laserprozess Schichtsysteme mit niedriger Rauigkeit. Hier erfolgt eine Reduzierung im Vergleich zu konventionell im Ofenprozess erzeugten PEEK-Schichten um mindestens 50 %, insbesondere aber auch um bis zu 80 %, des Rauheitswertes. Daraus resultiert ein besonders niedriger Reibkoeffizient, der sich besonders vorteilhaft im tribologischen Langzeitverhalten erweist. Ebenso ist eine deutliche Abnahme des Verschleißes durch diese Dispersionen erzielt.

Nach einer vorteilhaften Ausgestaltung des erfindungsgemäßen Herstellungsverfahrens ist die Beschichtungsdispersion eine Beschichtungsdispersion nach Anspruch 1.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
Fig.1: tribologische Prüfergebnisse der erfindungsgemäßen Beschichtungsdispersionen im Vergleich mit derzeit auf dem Markt befindlichen Beschichtungsdispersionen und
Fig.2: einen Direktvergleich bestehender Beschichtungsdispersionen mit einigen erfindungsgemäßen Beschichtungsdispersionen im POD-Test.

### Beschreibung der Ausführungsbeispiele

Die hier vorgestellten Beschichtungsdispersionen stellen tribologisches Beschichtungsmaterial für Reib- und Verschleißbeanspruchung im Bereich Maschinen-, Automobilbau, Luft- und Raumfahrttechnik, Medizintechnik und jeglicher industrieller Anwendung dar, welches ortsselektiv mit Hilfe von Laserstrahlung oder auch in konventionellen Beschichtungsverfahren (z.B. Ofenprozess) appliziert werden kann. Einen besonderen Anwendungsbereich stellen hochbeanspruchte Bauteile dar, die insbesondere tribologisch mit hohem Druck und/oder hoher Geschwindigkeit beaufschlagt werden.

Die Schichten können geometrisch präzise und begrenzt appliziert werden, auch ein additives Auftragen von Schichtsystemen, die den unterschiedlichen Anforderungen an einem Bauteil entsprechen, ist mit diesen Dispersionen möglich. Die Schichtsysteme können auf unterschiedlichen Substraten appliziert werden (z. B. Leichtbaumetalle, Stahl) oder in Kombination mit oxidischen Schichten Verbundschichtsysteme erzeugen. Mögliche Schichtdicken der erzeugten Systeme liegen im Bereich von 2-200 µm.

Durch die Hinzugabe und das Funktionalisieren der verschiedenen Additive ist es möglich, längere Standzeiten im Bereich der Verschleißbeständigkeit zu erreichen, aber auch die Gleitreibung weiter zu optimieren.

Die hier vorgestellten Beschichtungsdispersionen können aber auch in anderen konventionellen Beschichtungsprozessen appliziert werden, wie z.B. dem Aufschmelzen im Ofenprozess.

Die hier vorgestellten Beschichtungsdispersionen können nach dem Auftrag per Rakeln, Sprühen oder Drucken, insbesondere Siebdrucken, auf das Substrat in einem Laserprozess aufgeschmolzen werden. Hierbei erfolgt der Energieeintrag nur ortsselektiv mit einer sehr kurzen Wechselwirkung zwischen Laserstrahl, Schicht und Substrat. Somit erfährt das Substrat keinen hohen Wärmeeintrag und somit auch keine kritische Gefügeänderung und Festigkeitsreduzierung.

Des Weiteren ist es möglich, die Schichten nur ortselektiv am Bauteil dort zu applizieren, wo Verschleiß- und/oder Korrosionsbeständigkeit gefordert ist, ohne das gesamte Bauteil der thermischen Beanspruchung auszusetzen.

Durch das gezielte Aufbringen der Schichten können mehrschichtige Systeme an einem Bauteil realisiert werden und somit genau an die Anforderungen an einzelnen Stellen des Bauteils angepasst werden.

Sowohl ortselektiver Energieeintrag und Aufschmelzen der Schichten als auch Anpassung der Schichtdicken und -funktionen ist in der bisherigen Form der Schichtapplikation nicht möglich.

Die Zugabe von Additiven begünstigt die verschleißbedingten Eigenschaften der erzeugten Schichten und begünstigt ebenfalls das Einkoppeln der Laserstrahlung, wodurch der Energieeintrag direkt zum Aufschmelzen der Schicht genutzt wird, ohne das Substrat wärmezubelasten. Ebenfalls können bestimmte Additive durch die Laserstrahlung funktionalisiert werden und somit weitere Vorteile im Bereich des Verschleiß- und Korrosionsschutzes auf Seiten der Beschichtung bringen.

Bei den zuvor genannten Additiven, die in die Beschichtungsdispersionen eingebracht werden und anschließend als inkorporierte Partikel in der funktionalen Schicht vorherrschen, kann es sich um folgende Partikel (durchschnittliche Partikelgröße 40 nm - 10 µm) handeln:
Spinelle (z.B. Cobalt-Aluminium-, Kupfer-Chrom-Spinelle)
Carbide (z.B. Wolfram- oder Silizium-Carbide)
Nitride (z.B. Silizium- oder Bornitride)

Durch die Zugabe, die Konzentrationsvariation oder auch durch das Kombinieren der unterschiedlichen Additive können Schichteigenschaften so beeinflusst werden, dass bestimmte erforderliche Funktionen erfüllt werden können. Es können Schichteigenschaften eingestellt werden, die im Reibungsverlauf besonders den Reibwert herabsetzen, insbesondere reibpartnerschonend wirken oder eine komplett abriebbeständige Schicht darstellen.

Die hier vorgestellten PEEK-basierten wässrigen Dispersionen können im Laserprozess aufgeschmolzen und funktionalisiert werden, ohne das Substrat hinsichtlich seiner Härte oder Mikrostruktur nennenswert zu beeinflussen, da die Energie direkt in der Schicht umgesetzt wird.

Die erzeugten Schichtsysteme können überall dort eingesetzt werden, wo funktionale Schichten im Bereich Verschleiß- und Gleitoptimierung als auch Korrosionsschutz erforderlich sind und lokal präzise aufgetragen werden sollen, ohne den gesamten Körper beaufschlagen zu müssen.

Des Weiteren können die hier vorgestellten Beschichtungsdispersionen auch in konventionellen Beschichtungsprozessen appliziert werden.

Mit diesen Beschichtungswerkstoffen können geschlossene und homogene, aber auch gezielt strukturierte Schichten auf unterschiedlichen Substraten erzeugt werden, wobei ein ressourcenschonender und vor allem auch örtlich begrenzter Laseraufschmelz- und Funktionalisierungsprozess eingesetzt wird.

Besonders hervorzuheben sind die herausragenden Verschleißeigenschaften, die weiter unten vorgestellt werden, die die bestehenden Systeme bei Weitem übertreffen.

Durch Additivierung der Beschichtungsdispersionen können gezielt Schichteigenschaften eingestellt werden und diese auch im Mehrschichtensystem an entsprechenden Bauteilstellen appliziert werden.

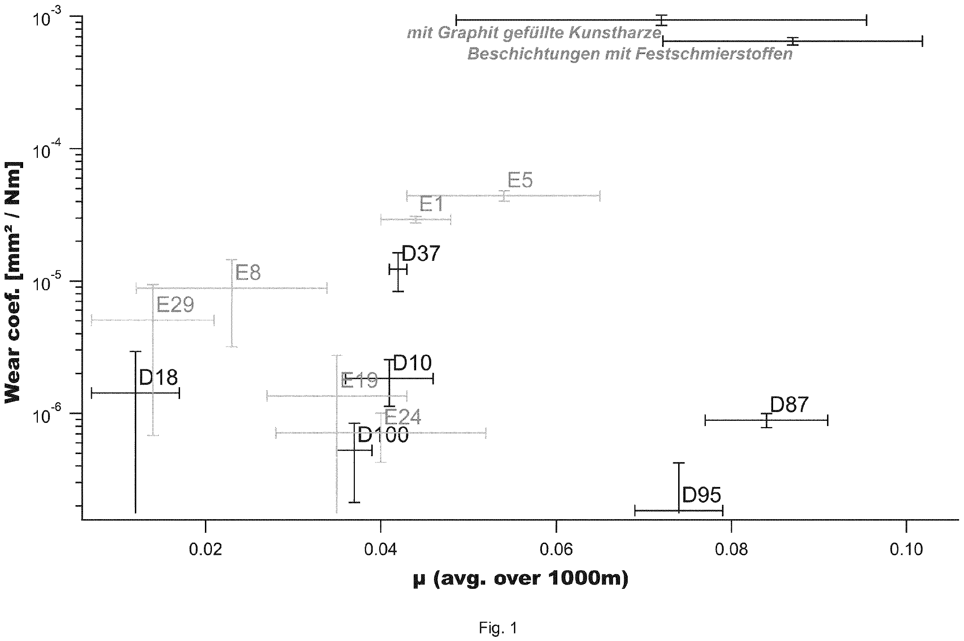

Im Rahmen der Entwicklung wurden verschiedene PEEK-basierte Dispersionen (Variationen der Additive) im Laserprozess z. B. auf Aluminiumprüfkörper aufgebracht. Geprüft wurde die Verschleißbeständigkeit der so erzeugten Schichtsysteme mit der Pinon-Disc (POD) Methode, wobei als Gegenkörper eine 100Cr6-Kugel mit einem Durchmesser von 6 mm diente. Aufgebracht wurde eine Last von 10 N, die Prüfung erfolgte ölgeschmiert in einer reziproken 300°-Bewegung. Kontinuierlich aufgezeichnet wurde der Reibkoeffizient, der spezifische Abriebskoeffizient wurde jeweils nach der Prüfung ermittelt. Fig. 1 zeigt das Ergebnis verschiedener erfindungsgemäßer Beschichtungsdispersionen bzw. Schichtsysteme im direkten Vergleich mit derzeitigen Gleitlacksystemen.

Fig. 1 zeigt tribologische Prüfergebnisse der erfindungsgemäßen Schichtsysteme bzw. Beschichtungsdispersionen (E1, E5, E8, E19, E24, E29, D10, D18, D37, D87, D95 und D100) im Vergleich mit derzeit auf dem Markt befindlichen Systemen (mit Graphit gefüllte Kunstharze und Beschichtungen mit Festschmierstoffen), die derzeit zur Gleit- und Verschleißoptimierung am Kolbenschaft Einsatz finden. Hierbei stellt die x-Achse den Reibkoeffizienten (µ), gemittelt über 1000 m, und die y-Achse den spezifischen Abriebskoeffizienten (Wear coef.) in mm<2>/Nm dar.

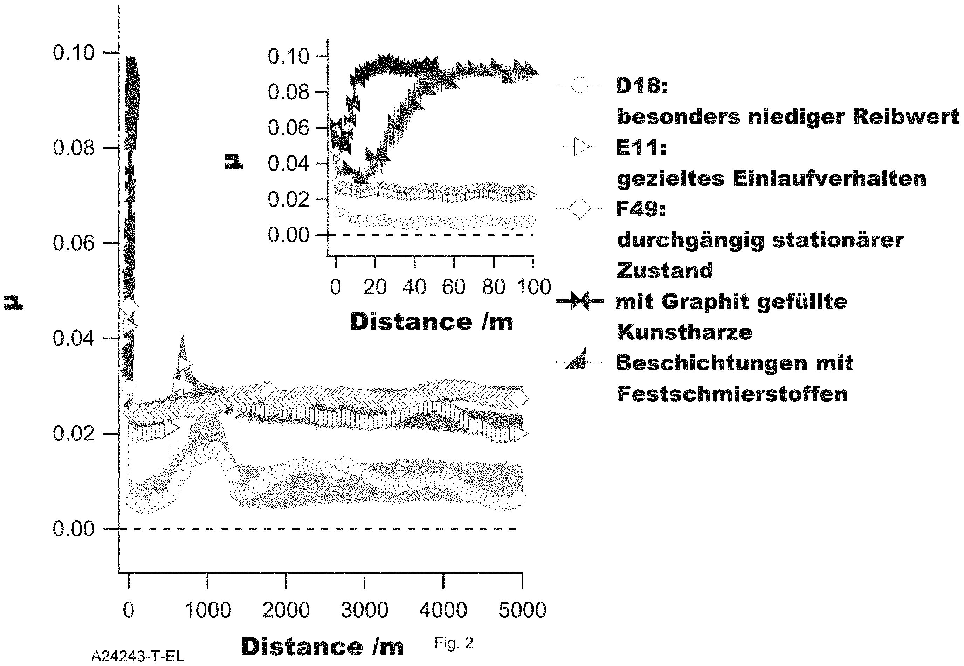

Fig. 2 zeigt einen Direktvergleich bestehender Systeme (mit Graphit gefüllte Kunstharze und Beschichtungen mit Festschmierstoffen), mit einigen erfindungsgemäßen Systemen bzw. Beschichtungsdispersionen (D18, E11, F49) im POD-Test. D18 weist einen besonders niedrigen Reibwert auf, die E11 weist ein gezieltes Einlaufverhalten auf und die F49 weist einen durchgängig stationären Zustand auf. Hierbei stellt die x-Achse die zurückgelegte Strecke (Distance) in m dar und die y-Achse den Reibkoeffizienten (µ) dar. Mit der Variation der Additive lässt sich das Einlaufverhalten erfindungsgemäßer Beschichtungsdispersionen bzw. Schichtsysteme direkt steuern und anschließend in einen stationären Zustand überführen, in dem der Reibkoeffizient im zeitlichen Verlauf immer weiter sinkt oder quasistationär bleibt. Im kleineren Abschnitt der Fig. 2 sind die ersten 100 m der Prüfung dargestellt. Aus diesen ist ersichtlich, dass die Schicht mit den Graphit gefüllten Kunstharzen nach knapp 10 m Prüflänge zerstört wird und somit der Reibkoeffizient deutlich steigt. Die neuere Entwicklung mit Festschmierstoffen beginnt mit einem niedrigeren Reibwert und ist erst nach rund 20 m Prüflänge abgerieben, während die hier vorgestellten Systeme komplett geschlossene Schichten - auch nach 5000 m Prüfstrecke - aufweisen.

Ein Anwendungsbeispiel kann beschichtetes Leichtmetall darstellen, wobei Stahl als Reibpartner dient und folgende Einstellungen möglich sind:
Reibpartner ohne Verschleiß
Reibpartner mit minimalem Verschleiß
Reibpartner mit gezieltem Verschleiß
Reibpartner mit vorherbestimmtem Einlaufverhalten, das in einem stationären Zustand mündet
Reibpartner ohne Verschleiß -> Opferschicht

Herstellung und Stabilität der Beschichtungsdispersionen:
stabile rheologische Eigenschaften über langen Zeitraum
Rheologische Eigenschaften können passend auf die Anforderungen eingestellt werden.
Additive zur chemischen Funktionalisierung der Partikel können hinzugefügt werden.

Inkorporierte Partikel:
Inkorporierte Partikel zur Bearbeitung mit dem Laserprozess geeignet Laserprozess ist geeignet, um Partikel zu bearbeiten oder zusätzlich zu funktionalisieren
Funktionale Schichteigenschaftsoptimierung durch Inkorporation der Partikel (Einflussnahme auf Kristallisationsgrad, Kohäsion, Duktilität...)
Durch inkorporierte Partikel wird die funktionale Bindung sowohl zum PEEK selber also auch zu einer weiteren Schicht funktionalisiert.

Alle hier dargestellten Merkmale können sowohl einzeln als auch in beliebiger Kombination miteinander erfindungswesentlich sein.

## Patentansprüche

1. Beschichtungsdispersion bestehend aus
- 25-50 Gew.-% Festkörperbestandteil,
- mindestens einem Netzmittel und
- mindestens einem Dispergierhilfsmittel, wobei der Festkörperbestandteil PEEK-Pulver beinhaltet,
**dadurch gekennzeichnet,**
**dass** der Festkörperbestandteil auch mindestens ein Wärmeeintrag minimierendes Additiv beinhaltet, welches mindestens ein Spinell, ein Carbid und/oder ein Nitrid ist.

2. Herstellungsverfahren einer Beschichtungsdispersion bestehend aus
- 25-50 Gew.-% Festkörperbestandteil,
- Netzmittel und
- Dispergierhilfsmittel, wobei der Festkörperbestandteil PEEK-Pulver und mindestens ein Additiv beinhaltet,
**dadurch gekennzeichnet,**
**dass** mindestens ein Spinell, ein Carbid und/oder ein Nitrid als ein Wärmeeintrag minimierendes Additiv unter Druckeinwirkung, Temperatureinwirkung, chemischer Einwirkung und/oder durch Wärmeeintrag einer Schutzkolloidierung unterzogen wird.

3. Herstellungsverfahren nach dem Anspruch 2,
**dadurch gekennzeichnet,**
**dass** die Beschichtungsdispersion eine Beschichtungsdispersion nach dem Anspruch 1 ist.

## Claims

1. Coating dispersion comprising
- 25-50 wt.% solid components,
- at least one wetting agent and
- at least one dispersing aid, wherein the solid components comprise PEEK powder,
**characterised in**
**that** the solid components also includes at least one heat input minimising additive which is at least one of a spinel, a carbide and/or a nitride.

2. Manufacturing process of a coating dispersion comprising
- 25-50 wt.% solid components,
- a wetting agent and
- a dispersing aid, wherein the solid components comprises PEEK powder and at least one additive,
**characterised in that**
at least one spinel, one carbide and/or one nitride is used as a heat input minimising additive which is subjected to protective colloidation under the effect of pressure, temperature, chemical action and/or heat, temperature action, chemical action and/or by heat input.

3. Manufacturing process according to claim 2,
**characterised in that**
**in that** the coating dispersion is a coating dispersion according to claim 1.

## Revendications

1. Dispersion de revêtement se composant de:
- 25-50 poids-% de composant de corps solde,
- et contenant au minimum un agent mouillant et
- au minimum un adjuvant de dispersion où le composant de corps solide contient de la poudre PEEK est caractérisé de sorte que le composant de corps solide contient aussi au mi nimum un adjuvant minimisant l'apport thermique qui est au minimum un spinelle, un carbure et/ou un nitrure.

2. Procédé de fabrication d'une dispersion de revêtement se composant de:
- 25-50 poids-% de composant de corps solde,
- d'un agent mouillant et
- et d'un adjuvant de dispersion où le composant de corps solide de la poudre PEEK contient au minium un adjuvant caractérisé de sorte qu'au minimum un spinelle, un carbure et/ou un nitrure est soumis en tant qu'adjuvant sous action de pression, sous effet thermique, sous effet chimique et/ou via apport thermique d'une collimation de protection.

3. Procédé de fabrication selon la revendication 2 est caractérisé de sorte que la dispersion de revêtement est conforme à la dispersion de revêtement de la revendication 1.
